# EUROPEAN PATENT SPECIFICATION

(11) **EP 3 899 213 B1**
(45) Date of publication and mention of the grant of the patent: **07.06.2023**
(21) Application number: 19832536.7
(22) Date of filing: 16.12.2019
(51) Int. Cl.: F01K 11/00, F01K 13/00, F22B 3/04, F22B 27/00

(54) **HEAT PUMP APPARATUS AND DISTRICT HEATING NETWORK COMPRISING A HEAT PUMP APPARATUS**
WÄRMEPUMPENVORRICHTUNG UND FERNWÄRMENETZ MIT EINER WÄRMEPUMPENVORRICHTUNG
APPAREIL DE POMPE À CHALEUR ET RÉSEAU DE CHAUFFAGE URBAIN COMPRENANT UN APPAREIL DE POMPE À CHALEUR

(30) Priority: 17.12.2018 EP 18213181
(43) Date of publication of application: 27.10.2021
(73) Proprietor: STAC Technology ApS, 2900 Hellerup (DK)
(72) Inventor: SØRENSEN, Henrik Schiøtt, 3650 Ølstykke (DK); CHRISTOFFERSEN, Poul Bohn, 2450 Copenhagen SV (DK); MINDS, Gunnar, 8270 Højbjerg (DK)
(74) Representative: Patrade A/S
(86) International application number: PCT/EP2019/085315
(87) International publication number: WO 2020/127023

(56) References cited:
- WO-A1-2013/130557
- US-A1- 2013 341 929
- US-A1- 2014 345 276
- US-A1- 2018 306 068

## Description

### FIELD OF THE INVENTION

The present invention relates generally to a thermally driven heat pump apparatus. The pump is driven by a Rankine cycle/evaporator and expander part at low temperatures. This is possible as the internal pressure is low resulting in e.g. water boiling at 70°C. The thermal energy introduced into the driving cycle may be from solar absorbing panels, excess process heat or district heating grids or combinations. The generated gas fluid is passed through an expander turbine, which converts the thermal energy into mechanical energy. The mechanical energy is transferred through an axel with proper gearing, to a compressor of a compressor cycle/ compressor part of the apparatus. The mechanical power may be added further energy from e.g. a combustion engine or electrical motor in various ratios.

The compressor generates a vacuum on the frontside thereby enabling the evaporation of the fluid of interest. Thermal energy is extracted from the evaporating liquid going into the gas phase. The gas is compressed increasing the internal pressure enabling condensation at higher temperatures. Thereby energy is pumped from one place to another. The elevated temperature allows for usage of the energy in another process. The energy may be used to preheat the Rankine cycle or simply function as heating. The evaporation process extracts energy from the fluid making it ideal as a cooling media.

Additionally, the invention relates to a district heating network comprising a heat pump apparatus.

### BACKGROUND OF THE INVENTION

Heat pump apparatuses of the above type is known from US 6581384 B1 US 2018/306068 A1 and US 2014/345276 A1 disclosing an apparatus for cooling and heating and WO 2007/038921 A1 and WO 2011/100974 A1 both disclosing an apparatus for cooling. In the known apparatuses the fluid is flowing in a closed cycle, i.e. no fluid is removed or added to the cycle during operation of the apparatus. In other words, no liquid is delivered to the cycle of the apparatus from an external liquid source and no liquid is delivered from the apparatus to an external liquid source during operation of the apparatus. Additionally, before entering the expander the liquid is heated by heat exchanging with an external heat source through a partition wall.

### SUMMARY OF THE INVENTION

It is an object of the present invention to provide a heat pump apparatus that satisfies the need for cooling.

A further object is to provide a versatile heat pump apparatus being useable for improving the performance of district heating plants.

An additional object is to provide a cost effective and reliable heat pump apparatus.

The present invention provides a heat pump apparatus comprising:
- an evaporator, such as an evaporation tank configured to evaporate by direct evaporation a liquid received from an external liquid source through a liquid inlet line and an evaporator inlet to an evaporation chamber, the pressure in the evaporation chamber being lower than the pressure in the liquid inlet line and sufficient low for evaporating the liquid entering the evaporation chamber, i.e. the pressure in the evaporation chamber is so that the evaporation temperature of the liquid associated with the pressure is lower than the temperature of the liquid entering the evaporation chamber through the evaporator inlet, and allowing for generating a pressurized vapor leaving the evaporator through an evaporator vapor outlet 60, the evaporator additionally comprising an evaporator liquid outlet
- an expander having an expander inlet and an expander outlet, the expander inlet having a fluid connection to the evaporator vapor outlet for receiving pressurized vapor from the evaporation to drive the expander,
- a compressor having a compressor inlet and a compressor outlet, the compressor being operatively driven by the expander for compressing a gas from a low pressure, low temperature inlet gas at the compressor inlet to a high pressure, high temperature outlet gas at the compressor outlet
- a first condenser having a first condenser inlet and a first condenser outlet, the first condenser inlet having a fluid connection to the expander outlet and being configured for condensing the fluid received from the expander and the first condenser outlet being connected to a first liquid outlet line.

By direct evaporation of the liquid received from an external heat source such as the heat source of district heating plants, the heat pump apparatus is suitable for increasing the performance of such plants and other plants or systems such as industrial cooling and heating systems and waste liquid systems.

Direct evaporation is to be understood as evaporation provided by vacuum or partly vacuum in the evaporator (evaporation tank).

External liquid source is to be understood as a liquid of which parts are removed from and supplied to the heat pump apparatus, in contrast to an internal liquid which is circulated internally of a heat pump system, such as the mentioned prior art heat pump systems.

It is preferred to use water as media entirely in the system, although other media are easily envisioned, especially natural media. By having the same media containing the thermal energy, e.g. district heating water, and having water evaporating driving the expander, enables direct evaporation strategy eliminating the use of a heat exchanger. Having e.g. the district heating water depressurized inside the evaporation unit directly, enables evaporation at temperatures approximately 5 °C lower than if using a heat exchanger. This is a significant difference in efficiency allowing evaporation at 70 °C compared to 75 °C. Direct condensation is also possible by having the same media in both the thermal system and in the Rankine cycle/evaporator and expander part of the apparatus. One example is envisioned where the forward district heating water (high temperature) is used for direct evaporation having vapor entering the expander and using the return water (low temperature) to be sprayed directly into the exhaust of the expander resulting in direct condensation. Again, allowing condensation at a higher temperature compared to using a heat exchanger/condenser. On the compression side of the invention direct condensation is also possible if the achieved pressure level is high enough to allow condensation using the return water. With this setup, nearly all energy used for driving the system is kept inside the district heating grid. It also enables for transferring the cooling capacity of the invention to be delivered to the district heating grid. For the case of using district heating or surplus heating from e.g. production processes this invention uses the high temperature line to drive the Rankine cycle in two ways. When performing the evaporation, the incoming water temperature is lowered e.g. from 80 °C to 75 °C. This water may be returned to the grid lowering the overall temperature of the forward string. The return water line has a small temperature increase as the condensation energy is transferred from the forward pipeline to the return line. The same strategy may also be deployed for a solar driven unit. This will result in an energy build up in the system, which is not desired in high efficiency system. For the case of district heating there will normally be a considerable thermal loss in pipeline grid properly leveling out the energy increase from this invention. Using only the district heating grid water in this invention will enable two major benefits. Firstly, as there is no longer a need for air-cooled condensation. The unit may be deployed in the basement of a large, tall building with no need for access to free air. Top floors and rooftops may then be utilized for other processes than cooling towers. Secondly, the cooling range is no longer dependent on the surrounding air or outside temperature. The temperature difference in the district energy grid is now the limiting factor, not the condensation capacity into the air. If the temperature difference in the grid is 30 K, one single unit may cool down the same 30 K. Working in series a cascade effect is readily envisioned with a cooling step of 30 K per unit independent of the air temperature.

This invention will aid in optimizing the usage of the district energy network. Traditionally many heating grids are run at poor performance during hot periods of the year. This invention allows for optimal use in this period as it generates a need for heating during hot seasons. Having a need for a larger flow in the pipelines also increase the performance of the grid as e.g. boilers may be run at optimum settings. This invention enables energy level transfers by the compressor cycle. The evaporation process requires energy in order to occur. This is done by absorbing energy from the surroundings resulting in that a temperature decrease could be used for cooling. The evaporated gases are compressed in order to be condensated at a higher temperature or pressure. The energy consumed by evaporation is fully delivered at condensation. So, water being evaporated at 60 °C may be condensated at 70 °C. This enables a thermally driven heat pump. For example, having a two-stage district heating network where the heating plant delivers a forward supply of 60 °C. It may be lifted to 70 °C by having a Rankine cycle running a 40 °C evaporations temperature. During the compression, the temperature will rise high enough in order to transfer thermal energy towards the Rankine cycle to allow full expansion without condensation in the expander.

According to an example the apparatus comprises a second condenser having a second condenser inlet and a second condenser outlet, the second condenser inlet having a fluid connection to the compressor outlet through which the high pressure, high temperature outlet gas leaves the compressor.

The second condenser outlet may have a fluid connection to an evaporation system.

The evaporation system can comprise an absorber having an absorber inlet and an absorber outlet, the absorber inlet having a fluid connection to the second condenser outlet, the absorber outlet being connected to the compressor inlet, through which low pressure, low temperature gas enters the compressor.

Alternatively, the evaporation system can comprise a liquid-gas separator separating liquid from gas and having a first inlet and a second inlet, a separator gas outlet and a separator liquid outlet, the separator gas outlet having a fluid connection to the compressor inlet through which low pressure, low temperature enters the compressor, the separator liquid outlet having a fluid connection to an absorber inlet of an absorber having an absorber outlet the first inlet of the separator has a fluid connection to the outlet of the second condenser, and the second inlet of the separator has a fluid connection to the outlet of the absorber.

As an example, the second condenser can be a spray condenser having additionally a second inlet for liquid supply of a liquid having a first temperature, and where spray condensation of the high pressure, high temperature outlet gas with the liquid having the first temperature provides for a temperature increase so that liquid leaving the second condenser through the outlet thereof has a second temperature being higher than the first temperature.

The first condenser can be a spray condenser having additionally a second inlet (80) for liquid supply of a liquid having a first temperature, and where spray condensation of the fluid received from the expander with the liquid having the first temperature provides for a temperature increase so that liquid leaving the first condenser through the outlet thereof has a second temperature being higher than the first temperature.

The first external liquid source can be a single line system and the first liquid inlet line and the first liquid outlet line are connected to one and the same single line of the first external liquid source.

As an example, the first external liquid source of the first external liquid fluid source can be a liquid cycle system comprising a first external source supply line and a first external source return line

The liquid in the first external source supply line of the first external liquid source can be hotter than the liquid in the first external source return line of the first external liquid source.

The first liquid inlet line can be connected to a first external source supply line of the first external source of liquid fluid.

The first liquid inlet line can be connected to a first external source return line of the first external source of liquid fluid.

The first liquid outlet line can be connected to a first external source supply line of the first external source of liquid fluid.

The first liquid outlet line can be connected to a first external source return line of the first external source of liquid fluid.

The evaporator liquid outlet may have a fluid connection to the first external liquid source and the first condenser outlet may have a fluid connection to the first external liquid source.

According to an example the gas-liquid separator has a fluid connection to the second condenser and the second condenser outlet is connected to the first liquid outlet line being in fluid connection to the first external liquid source.

As a further example the compressor outlet can be fluid connected to the second condenser optionally being a spray condenser via a heat exchanger arranged on a wall of the evaporator or in the evaporator chamber of the evaporator, thereby allowing for transfer of energy from compressor to expander.

The compressor outlet may be fluid connected to the second condenser, optionally being a spray condenser, via a heat exchanger exchanging heat between the compressor outlet line and the compressor inlet line between the gas-liquid separator and the compressor

An external heating source can be arranged in the fluid connection (line) between the condenser and the expander.

In an example, two or more expanders are arranged in series, the first expander being driven by the exhaust flow from the evaporator and the second expander being driven by the exhaust flow from the first expander.

The expanders can be drivingly connected to respective compressors arranged in parallel or in series.

In an example, the first expander is drivingly connected to a compressor and the second expander is drivingly connected to a generator.

In a further example, a heat exchanger is arranged between the fluid outlet line from the compressor and the exhaust line from the first to the second expander

In an additional example, two or more expanders are arranged in parallel, both being directly driven by respective exhaust flows from the evaporator and being drivingly connected to respective compressors arranged in series, exhaust gas from the first compressor being delivered to the second compressor.

In a further example, an auxiliary motor is connected to the expander or compressor for assisting in start-up procedures or during continuous operation procedures.

The present invention additionally provides District heating network comprising:
a first external liquid source being a first grid and a second external liquid source being a second grid, the first grid comprising a first grid supply line and a first grid return line, and the second grid comprising a second grid supply line and a second grid return line,
the first grid supply line being colder than the second grid supply line and the first grid return line (54) being colder than the second grid return line,
the lines of the first and the second grid being connected to a heat pump apparatus according to claims 1 and 2, the heat pump apparatus additionally comprising:
   a gas-liquid separator, separating gas from liquid and having a liquid inlet and a liquid outlet and a gas outlet having a fluid connection to the compressor inlet.

According to an example, the first liquid inlet line to the evaporator has a liquid connection to the return line of the second grid. The liquid inlet of the separator has a fluid connection to the supply line of the first grid. The inlet of the second condenser has a fluid connection to the liquid outlet of the separator. The liquid outlet of the evaporator has a fluid connection to the return line of the second grid. The liquid outlet of the second condenser has a fluid connection to the supply line of the second grid, and the liquid outlet line from the first condenser has a fluid connection to the return line of the first grid.

According to a further example, the liquid inlet line to the evaporator has a fluid connection to the supply line of the first grid. The liquid inlet to the separator has a fluid connection to the return line of the second grid. The liquid outlet from the separator has a fluid connection to the return line of the second grid. The evaporator liquid outlet has a fluid connection to the second condenser. The second condenser has a fluid outlet to the supply line of the second grid, and the liquid outlet line from the first condenser has a fluid connection to the return line of the first grid.

Inlet lines from the first or a second external liquid source are preferably provided with depressurizing means such as a reduction valve or a throttle valve in order to match the low internal pressure (partly vacuum) of the apparatus.

Outlet lines from the apparatus to the first and or a second external liquid source are preferably provided with pressurizing means such as a pump in order to match the low pressure in the apparatus with the higher pressure og the first and second external liquid source.

Instead of using pressurizing and depressurizing means in the outlet lines and inlet lines respectively so-called boot-strapping pumps can be used to pressurize the fluid in the outlet lines and depressurize the fluid in the inlet lines.

Briefly stated a bootstrapping pump is a combined turbine or reverse pump and a pump having mutually connected shafts. From a liquid source a high pressure, e.g. 6 bar is delivered to the inlet of the turbine driving the pump. Whereby the pressure of the liquid is lowered to e.g. 0,5 bar at the outlet of the turbine. The liquid of 0,5 bar can be delivered to the apparatus of the present invention. The low fluid pressure (partly vacuum) in the apparatus according to the invention supplies a low-pressure fluid, e.g. 0,5 bar to the inlet of the pump. The pump increases the pressure of the fluid to e.g. 5,9 bar. As 5,9 bar is not sufficient to pump liquid back to the external liquid source having a pressure of e.g. 6 bar, the liquid from the pump outlet is delivered to a small pump increasing the pressure with e.g. 0,2 bar to 6,1 bar allowing to pump the liquid back to the external liquid source.

For the case of having district heating water entering the system and returning it to the district energy grid the work required with bootstrapping pumps is one order of magnitude less than having a pressure valve in combination with a regular pump. District heating networks around the world are designed with forward pressures from 4 bars to above 28 bars with lower pressure on the return water. Even for a system connected to a solar panel a significant efficiency increase is found using these pumps.

### BRIEF DESCRIPTION OF THE FIGURES

Embodiments of the invention will be described in the following with regards to the accompanying figures. The figures show one way of implementing the present invention and are not to be construed as being limiting to other possible embodiments.
Fig. 1 illustrates a first example of a heat pump apparatus according to the present invention.
Fig. 2 illustrates an example being a slight modification of the first example, a liquid-gas separator being added to the first example.
Fig. 3 illustrates an example where the heat pump apparatus is used for reducing the temperature of the water in the return line of a district heating system.
Fig. 4 illustrates an example where bootstrapping pumps are used.
Fig. 5 illustrates an additional example using bootstrapping pumps and where a connection line is provided between separator and second condenser.
Fig. 6 illustrates an example allowing for direct generation of superheated steam.
Fig, 7 illustrates an example with a heat exchanger increasing the temperature of the inlet line to the compressor.
Fig. 8 illustrates an example where superheated steam is generated by a heat generating source.
Fig. 9 illustrates an example where compressed steam from the compressor is used to heat the evaporator.
Fig. 10 illustrates an example with multiple parallel expanders and compressors in series for higher pressure increase.
Fig. 11 illustrates an example with multiple expanders in series and compressors working at different temperature ranges.
Fig. 12 illustrates a first example of a district heating network, where the heat pump uses the return line of the second grit for driving the expander.
Fig. 13 illustrates a second example of a district heating network, where the heat pump uses the supply/forward line of the first grit for driving the expander.
Fig. 14 illustrates the district heating network where the heat pump apparatus is arranged between the first grid and the second grid.
Fig. 15 illustrates an example where power is generated.
Fig. 16 illustrates a further example where power is generated.

### DETAILED DESCRIPTION OF THE INVENTION

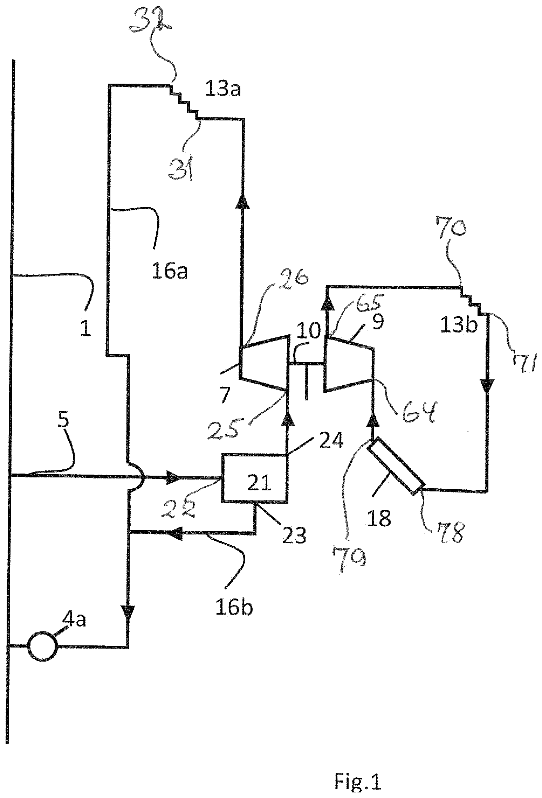

Fig 1. Illustrates an example of an apparatus for energy transfer from the absorbing surface 18 to the surroundings by heat exchanger 13b. Hot water is provided by the heat source 1 connected to the evaporation tank 21 through a line 5. The pipe acts simultaneously as a reduction valve resulting in a lowered pressure in the evaporator 21 allowing the water to directly evaporate. Non-evaporated water is returned and mixed with condensed water from 16a in the line 16b and returned to the heat source 1. A pump 4a increases the pressure of the liquid to match the pressure from the heat source 1. In contrast to any prior art, the water is directly evaporated in the evaporator 21 allowing for steam generation at lowest possible temperature level from the heat source and eliminating the use of the heat exchanger 2, taught by prior art.

The steam from the evaporator 21 drives an expander 7 before being condensed in a heat exchanger/condenser13a, from where the condensed water is returned to the heat source 1 through line 16a. The expander 7 drives the compressor 9 by the mechanical connection shaft 10. A pump circulates liquid refrigerant to the absorbing surface 18, where heat energy is absorbed from the surroundings. The refrigerant becomes a mixture of liquid and gas in the absorber 18. However, at the top thereof the gas is separated from the liquid whereby essentially only gas is flowing from the outlet 79 of the absorber to the inlet 64 of the compressor.

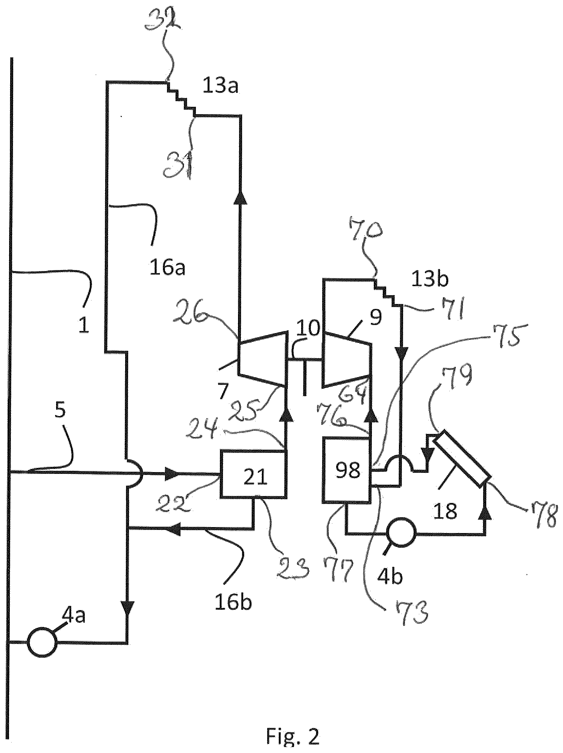

Fig. 2 shows an example being a modification of the example of Fig.1. The example of the heat pump apparatus shown I Fig. 2 provides for energy transfer from the absorbing surface 18 to the surroundings by heat exchanger 13b. Hot water is provided by the heat source 1 connected to the evaporation tank 21 through a line 5. The pipe acts simultaneously as a reduction valve resulting in a lowered pressure in 21 allowing the water to directly evaporate. Non-evaporated water is returned and mixed with condensed water from 16a in line 16b and returned to the heat source 1. A pump 4a increases the pressure of the liquid to match the pressure from the heat source 1. In contrast to any prior art, the water is directly evaporated in the evaporator 21 allowing for steam generation at the lowest possible temperature level from the heat source and eliminating the use of the heat exchanger 2, taught by prior art. The steam from the evaporator 21 drives an expander 7 before being condensed in a heat exchanger/condenser 13a, from where the condensed water is returned to the heat source 1 through a line 16a. The expander 7 drives the compressor 9 by the mechanical connection shaft 10. A pump circulates liquid refrigerant to the absorbing surface 18, where heat energy is absorbed from the surroundings.

The refrigerant becomes a mixture of liquid and gas in the absorber 18. The two phases are separated in the separation tank 98 as the connected compressor removes the gas phase by applying a vacuum. The remaining liquid is then recycled in this heat absorbing cycle. The gas phase is lead from the compressor to a heat exchanger or condenser 13b for condensation. The heat from this process is transferred to surroundings in the second condenser 13b. In contrast to prior art, the two cycles (Rankine and Carnot) are separated with no material exchange. Thereby different driving and refrigerating medias are readily used, if desired.

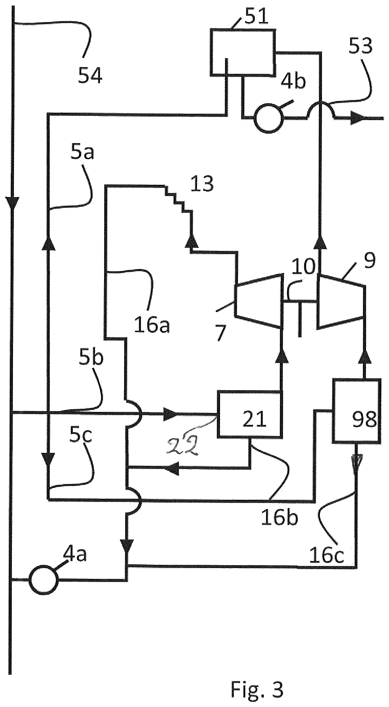

Fig. 3 illustrates an example where the heat pump apparatus is used for reducing the temperature of the water in the return line of a district heating system. Return water is flowing from the district heating plant in the return line 54. The return water is depressurized and divided into a flow in each of the three lines 5a, 5b. 5c. The flow in line 5a is used for spray condensation in the spray condenser 51. The flow in line 5b is evaporated in the evaporator 21 the evaporated steam driving the expander 7. The flow in the third line 5c is evaporated in the liquid-gas separator 98. The evaporated steam enters the compressor through the inlet thereof and is by the compressor pumped into the spray condenser 51 and condensed. Thereby hot water can be pumped into the forward line 53. As a result, the return flow in the return line is cooled and the plant may thereby obtain improved efficiency.

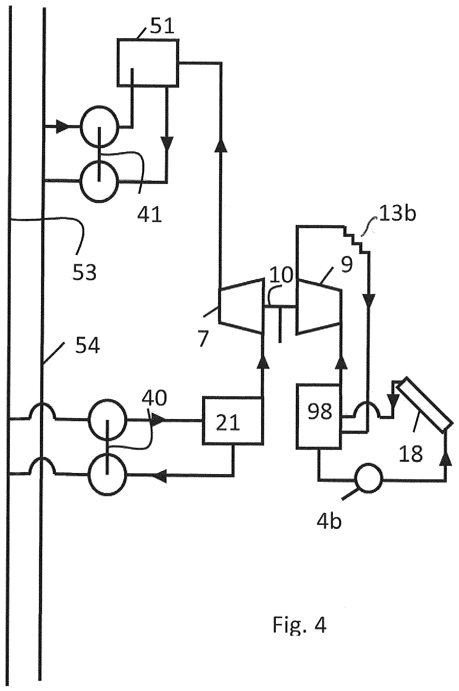

Fig. 4 illustrates an apparatus where the heat source 1 is depictured as a district heating system with a forward/supply line 53 and a return supply line 54. Normally, the flow in the forward line 53 has a higher temperature than the flow in the return line 54 The forward line 53 is lead through a bootstrapping pump 40 into the evaporation tank 21. The energy obtained from the depressurizing process is absorbed in the bootstrapping pump 40 for use in returning the flow to the heat source. In the evaporator 21 steam is generated which passes through the expander 7 causing it to rotate. The remaining water in the evaporator 21 is returned through the bootstrapping pump 40 to the heat source 1. By using bootstrapping pumps, the workload for returning the liquid is minimized. Water from the return flow 54 is lead through the bootstrapping pump 42 for direct condensation in the first condenser 51 of the expander exhaust steam. The resulting liquid is returned to the heat source 54 through the bootstrapping pump40. The Carnot cycle is in this illustration similar to that of figure 2.

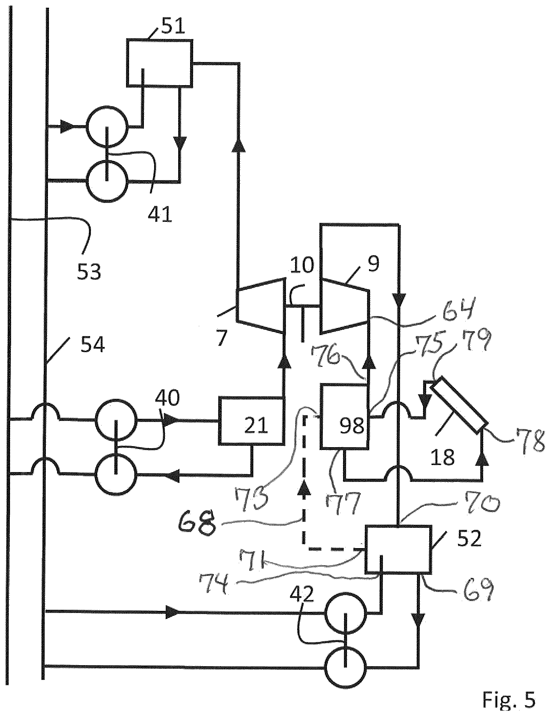

Fig 5 illustrates a cooling apparatus connected to the district heating grid. Hot water is supplied by the forward pipe (53) into the bootstrapping pump 40. The depressurized water enters the evaporation tank 21 allowing the generation of steam. The steam is feed through the expander 7, which via the shaft 10 drives the compressor 9. The term shaft is to be construed broad and comprises all means or devices being able to provide a mechanical connection. This includes the usage of gearing for different rotation speed of the expander 7 and the compressor 9. In this and the following embodiments the compressor 9 may be of any geometry or technology like a radial centrifugal compressor or an axial compressor. The compressor steps may be implemented in series or parallel. It is assumed that a sufficient pressure rate is generated in order to be compatible with the requirements for condensation and eventual heat exchange. The exhaust from the expander 7 is condensed via direct water spray condensation in the tank 51. The liquid water in the tank 51 is supplied by the district heating return water 54. The water is depressurized in a bootstrapping pump 41. The condensate is pumped by the bootstrapping pump 41 back into the district heating grid 54. The compressor 9 generates a continuous vacuum in the phase separation tank 98 and removes the steam from the water. The cooling is provided by the heat absorbing surface 18. The heat is absorbed by generating a water/steam mixture, which is phase separated in the separator 98. The compressed gas from the compressor 9 is condensed in a direct water spray condensation in tank 52. The liquid water in the second condenser 52 is supplied by the district heating return water from the return line 54. The water is depressurized in bootstrapping pump 42. The condensate is by the bootstrapping pump 42 pumped back into the district heating grid 54.

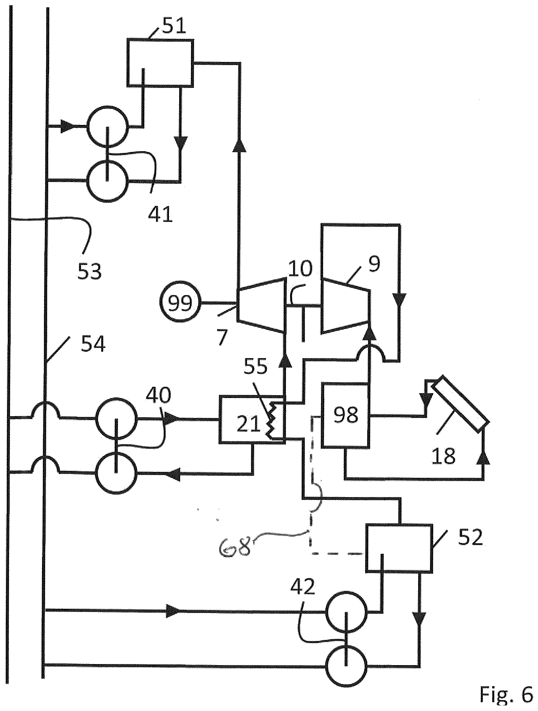

Alternatively, the condensation may be done into surrounding air via 13b. The exhaust from the expander 7 may in a similar fashion be condensed by a setup using a first condenser 13a. The unused water in the evaporator 21 is pumped by the bootstrapping pump 40 back into the district heating grid 53. The fluid connection line 68 shown in dotted lines between the separator 98 and the second condenser 52 is optional in the sense that it can be omitted if the heat pump apparatus is refilled with liquid. However, the connection line is advantageous as it maintains sufficient water in the heat pump apparatus without any need for refilling. The same goes for the connection lines 68 shown in Fig. 6 to 10.

Fig 6 illustrates another embodiment where the compressed steam from the compressor 9 is lead to a heat exchanger 55 heating the liquid gas mixture in the evaporator 21 allowing for direct generation of superheated steam, which is lead into the expander 7. A motor 99 attached to either the expander 7, the shaft 10 or the compressor 9 would aid in the start-up procedure or continuously also allowing for hybrid powering of the apparatus or used to manage the rotation speed of the expander 7, the shaft 10 and the compressor 9. The motor 99 could work as a power generator if sufficient thermal energy is available.

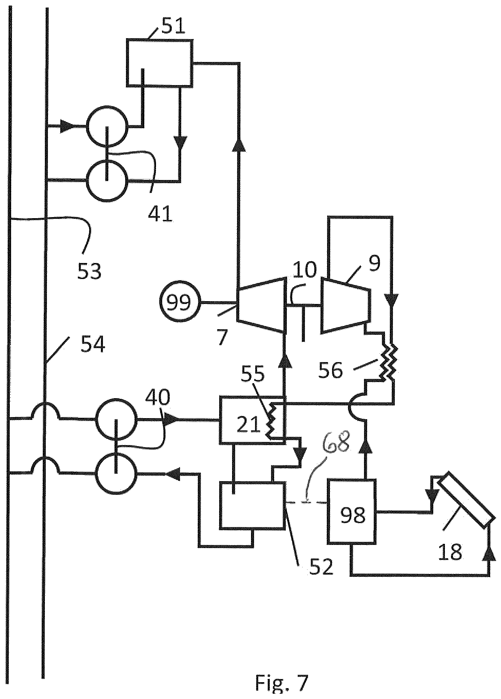

Fig 7 is a further embodiment of the illustration of figure 5. With sufficiently high exhaust temperature from the compressor 9 direct condensation using the leftover water from the evaporator 21 is possible in the second condenser 52. This will result in a temperature increase for the water being pumped back into the forward stream in supply line 53. This will transfer the absorbed cooling energy to the forward stream in supply line 53 neutralizing the thermal decrease from the usage of the apparatus and minimizing the increase in temperature on the return stream line 54. The heat exchanger 56 will increase the likelihood of removing tiny droplets going into the compressor by evaporation, thereby increasing the efficiency of the compressor 9. As the ingoing temperature to the compressor 9 is sequentially increased the resulting temperatures in the heat exchanger 55 also increases making the heat transfer more efficient.

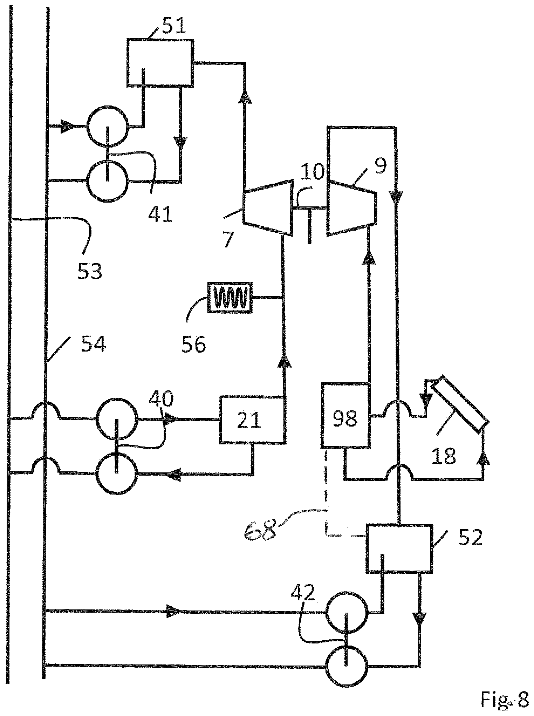

Fig 8 illustrates a further preferred embodiment where superheated steam is generated by a microwave or infrared generator 56 impinging on the flow. The generator 56 could be replaced by any heat generating source as a gas burner, mechanical effect or electrical heater.

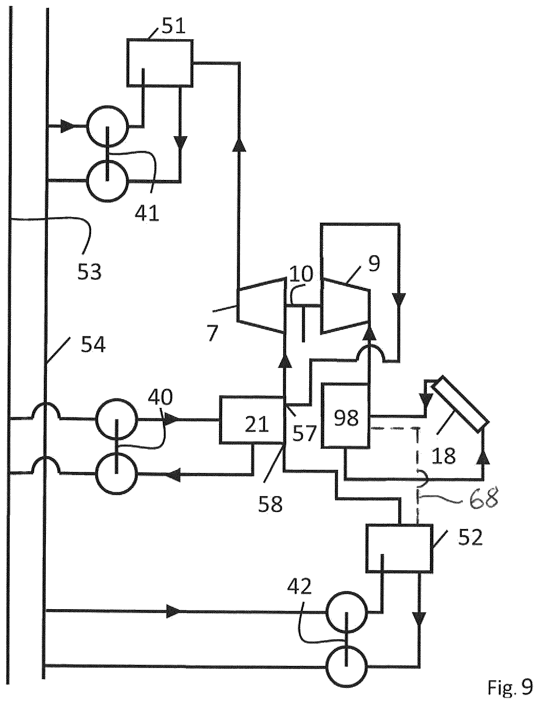

Fig 9 illustrates another embodiment where the compressed steam from compressor 9 is used to heat the evaporation tank 21 entering at connection 57 and exiting at connection 58. As the tank is heated up, superheated steam is lead into the expander 7. The system can be used in a series of cascading units, where one unit aids the next unit by placing the absorber 18 near either the condenser 51 or the second condenser 52 allowing for a larger total cooling range. The condensation process of the bootstrapping pump 41 and the first condenser 51 and/or bootstrapping pump 42 and second condenser 52 may be replaced by air cooled condensation as illustrated in figure 3 by condenser 13. The phase separation in 98 and energy absorption in absorber 18 may be combined in a single unit, e.g. by the compressor 9 applying vacuum directly on absorber 18.

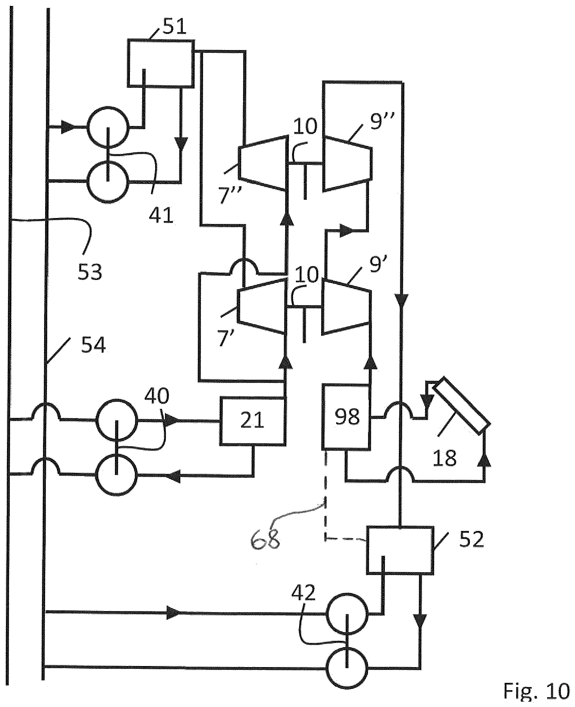

Fig 10 illustrates an embodiment where multiple stages of compression is shown by having compressor 9' and 9" being driven by expanders 7' and 7". A first pair of expander 7' and compressor 9" are connected via a first rotation axle 10' for synchronous driving, and a second pair of expander 7" and compressor 9' are connected via a second rotation axle 10" for synchronous driving. In contrast to prior art, the expanders are driven in parallel. The advantage of having the expanders in parallel is that they will run at the same pressure, in contrast to run in a setup with having decreasing pressure resulting in reduced rotation speed of the axel resulting in less pressure build up in the compressor. Having the same rotational speed then dictates that the compressor flow needs to increase, this is done by increasing the compressor size. In this embodiment cooling may be performed at two different temperatures simultaneously as the two cooling cycles may be operated at different evaporation pressures as the compressors 9' and 9" run in parallel. This embodiment may be expanded to provide multiple cooling temperatures provided by the same apparatus. More compressors may be added in series or parallel either to 9' or 9".

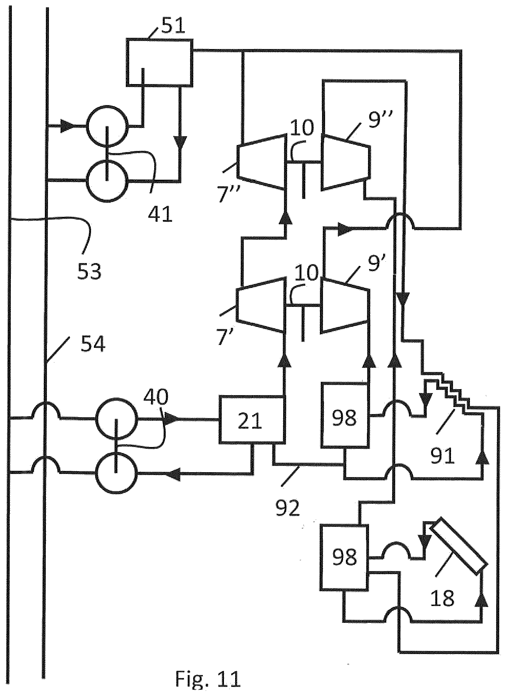

Fig 11 illustrates an embodiment having the expanders 7',7" working in series, but having the compressors 9',9" working in parallel. The compressor 9" is applying vacuum to a separate Carnot cycle than compressor 9'. This embodiment allows for the use of two different refrigerants simultaneously. In this embodiment, the Carnot cycle 91, 98', 9', 51 water may be the refrigerant in one cycle and NH₃ in the cycle 18, 98", 9", 91, where the heat exchanger 91 allows for condensation of one refrigerant by absorbing the heat in the other refrigerant. This allows for true cascade use of the apparatus and may be further expanded to multiple stages of compression of similar or different refrigerants. Thereby operational temperature range is drastically expanded enabling even cryogenic cooling. In this embodiment the direct condensation process is combined for both the expanders 7', 7" and the compressor 9'. The fluid connection 92 allows for liquid exchange between the Rankine and Carnot cycle, thereby lowering the requirements for liquid filling of the apparatus. If the liquid from the heat source 1, 53,54 is suitable for being evaporated in the evaporator 21, a heat exchanger should be placed in between the heat source and the bootstrap pump (40,41,42). Thereby ideal driving media may still be used in the apparatus. Some old district heating systems use soap-based detergents which will stop the turbines. Heat exchange should then be used, where the bootstrap pump (40,41,42) still regulates the liquid pressure, thereby controlling where steam is generated.

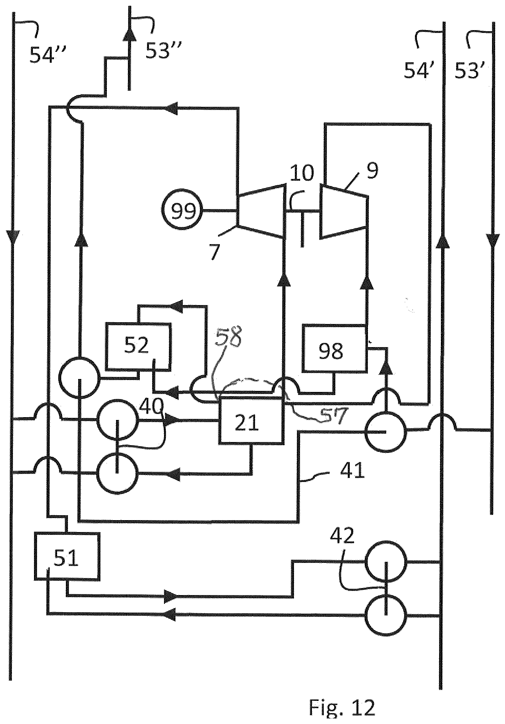

Fig 12 illustrates an embodiment for heat generation. District heating networks 53', 54' and 53",54" are grids with different temperature set one grid lower 53',54' than 53",54". The return water 54" is via the bootstrapping pump 40 entered into the apparatus' evaporation tank 21. The tank is heated by steam entering at connection 57 and exiting at connection 58 from the compressor 9 allowing direct generation of superheated steam. This steam is expanded over expander 7 which rotates the spindle 10 and the connected compressor 9. The exhaust steam is condensed in 51 via bootstrapping pump 42, which supplies colder water from the return water supply 54'. From the cold forward supply 53' water enters the apparatus via a bootstrapping pump 41 into the phase separation tank 98. The compressor 9 applies a vacuum to the separator 98 evaporating steam vapour and compressing it. The compressed gas heats up the evaporation tank 21 before it is condensed in the second condenser 52 by direct spray condensation. The non-evaporated water in the separator 98 is used for the process in the second condenser 52 resulting in a warmer liquid phase. The hot water is pumped via a bootstrapping pump 41 into the warm forward district heating grid 53". A motor 99 attached to either the expander 7, the shaft 10 or the compressor 9 would aid in the start-up procedure or also continuously allowing for hybrid powering of the apparatus or for managing the rotation speed of the expander 7, the shaft 10 or the compressor 9..

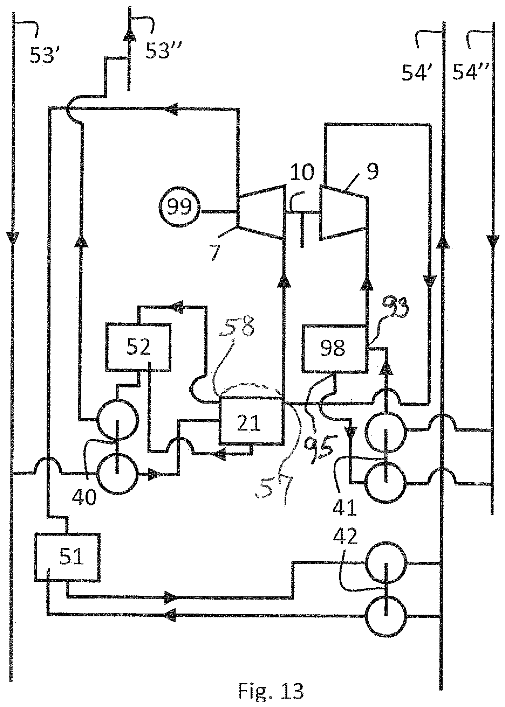

Fig 13 illustrates a further embodiment generating hot water to the district heating grid 53" driven by the colder forward grid 53'. The energy is pumped from the hot return water 54" into the forward 53" grid. Condensation of the expansion is using the cold return water grid 54'. From 53' water is supplied to bootstrapping pump 40 and into evaporator tank 21. The tank is heated by steam, entering at connection 57 and exiting at connection 58, from the compressor 9 allowing direct generation of superheated steam. This steam is expanded over expander 7 which rotates the shaft 10 and the connected compressor 9. The exhaust steam is condensed in first condenser 51 via a bootstrapping pump 42, which supplies colder water from the return water supply 54'.

From the hot return supply 54" water enters the apparatus via bootstrapping pump 41 into the phase separation tank 98. The compressor 9 applies a vacuum to the separator 98 evaporating steam vapor and compressing it. The compressed gas heats up the evaporation tank 21 before it is condensed in the second condenser 52 by direct spray condensation. The non-evaporated water in the evaporator 21 is used for the condensing process in second condenser 52 resulting in a warmer liquid phase. The hot water is pumped via bootstrapping pump 40 into the warm forward district heating grid 53". A motor 99 attached to either the expander 7, the shaft 10 or the compressor 9 would aid in the start-up procedure or continuously also allowing for hybrid powering of the apparatus or used to manage the rotation speed of the expander 7, the shaft 10 or the compressor 9. Alternatively return line 54' could be connected to the bootstrapping pump 42 and the return line 54" connected to the bootstrapping pump 41.

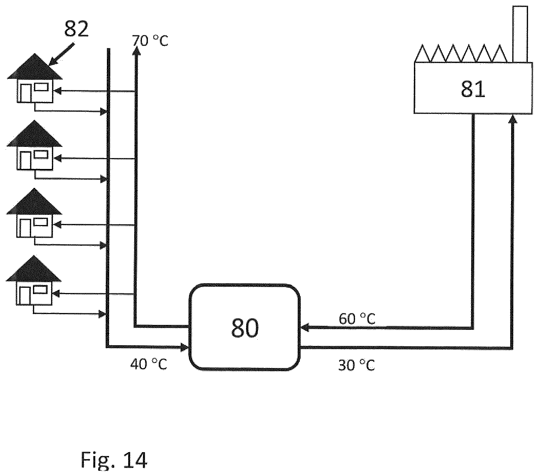

Fig 14 illustrates an example of the placement of the energy pump 80 in connection to a hot water supply system further connected to the end users 82 being single family homes, apartment complexes, commercial offices and or industrial buildings. This invention is fully scalable from a single house to entire grids similar of district heating clusters. Surplus heat is provided by a district heating plant 81, solar park or industry with surplus process heat through hot water pipes. Here illustrated having 60°C leaving a district heating plant 81 entering the energy pump 80. Energy is pumped from e.g. the return water 40 °C to the forward stream resulting in 70 °C and returning 30 °C to the district heating plant. In this embodiment the grid is boosted at the fare end the pipeline grid. Thereby losses due to heat lost from the pipeline into the surroundings are greatly reduced as the temperature of the forward stream travelling most distance is reduced. Another embodiment would place the energy pump 80 at the entry to the district heating plant 81. For some district heating plants 81, the temperature returning is critical, especially for co-generation plants providing both power and heat as power generation yield is lowered with high temperature on the return water. By installing an energy pump 80 using the return water as input, the return water temperature is lowered by transferring the energy to the outgoing pipeline, thereby ensuring optimal temperature levels for the plant.

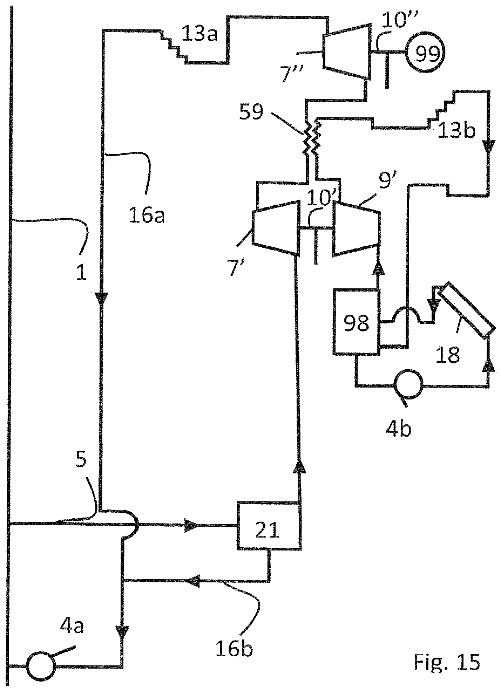

Fig. 15 illustrates an example for power generation. From the heat source 1 thermal energy is transferred to the apparatus through a fluid connection 5 into an evaporation chamber 21, in which a gas phase and a liquid phase are generated. The liquid residue is lead through connection 16b to the return pump 4a and returned to the heat source. The gas phase is lead through an expander 7' which spins a compressor 9'. The exhaust from the expander is reheated in heat exchanger 59. The compressor 9' separates the gas and liquid phase in 98. The energy for evaporation is absorbed in the absorber 18. The compressor increases the temperature of the gas phase, which thereby may transfer energy in heat exchanger 59 to the Rankine cycle. After reheating the exhaust from expander 7' another expansion occurs in expander 7". When expander 7" is connected via shaft 10" to the generator 99 electrical power is produced. The Rankine cycle from expander 7" may be completed by gas phase condensation in first condenser 13a and the liquid returned to the heat source 1. Alternatively, the process of reheating with later expansion and power generation the exhaust gas by heat exchanging from a Carnot cycle may be repeated numerous times for highest possible power generation yield. The energy transfer from compression may be from a single compressor or done by several compressors introducing energy from separate thermal sources by absorbing through absorber 18.

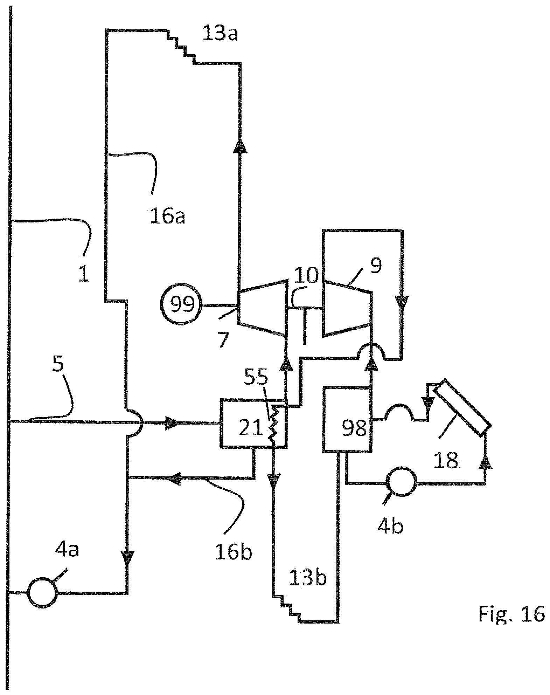

Fig. 16 illustrates example for power generation. From the heat source 1 thermal energy is transferred to the apparatus through a fluid connection 5 into an evaporation chamber 21, in which a gas phase and liquid phase are generated. The liquid residue is lead through connection 16b to the return pump 4a and returned to the heat source. The gas phase is lead through an expander 7', which spins a compressor 9'. The exhaust from the expander is reheated in heat exchanger 59. The compressor 9' separates the gas and liquid phase in 98. The energy for evaporation is absorbed in 18. The compressor increases the temperature of the gas phase which thereby may transfer energy in heat exchanger 59 to the Rankine cycle. After reheating the exhaust from expander 7' another expansion occurs in expander 7". When expander 7" is connected via shaft 10" to the generator 99, electrical power is produced. The Rankine cycle from expander 7" may be completed by gas phase condensation in first condenser13a and the liquid returned to the heat source 1. Alternatively, the process of reheating with later expansion and power generation the exhaust gas by heat exchanging from a Carnot cycle may be repeated numerous times for highest possible power generation yield. The energy transfer from compression may be from a single compressor or done by several compressors introducing energy from separate thermal sources by absorbing through absorber 18.

### List of reference numerals

- 1.: heat source line
- 4a.: pump
- 4b.: pump
- 5.: liquid inlet line
- 5a.: first line
- 5b.: second line
- 5c.: third line
- 7.: expander
- 7'.: expander
- 7": expander
- 9.: compressor
- 9'.: compressor
- 10.: shaft
- 13a.: first condenser
- 13b.: second condenser
- 16.: outlet line
- 16a.: first outlet line
- 16b.: second outlet line
- 16c.: third outlet line
- 18.: absorber
- 21.: evaporator
- 22.: evaporator inlet
- 23.: evaporator liquid outlet
- 24.: evaporator vapor outlet
- 25.: expander inlet
- 26.: expander outlet
- 31.: first condenser inlet
- 32.: first condenser outlet
- 33.: first liquid outlet line
- 40.: bootstrapping pump
- 41.: bootstrapping pump
- 42.: bootstrapping pump
- 51.: first condenser (spray condenser)
- 52.: second condenser (spray condenser)
- 53.: supply line
- 53': supply line of first grid
- 53": supply line of second grid
- 54.: return line
- 54'.: Return line of first grid
- 54".: Return line of second grid
- 55.: heat exchanger
- 56.: heat exchanger
- 56.: heat generating source
- 57.: connection
- 58.: connection
- 57-58.: heat exchanger
- 59.: heat exchanger
- 64.: compressor inlet
- 65.: compressor outlet
- 68.: connection line between second condenser 52 and separator 98
- 69.: second condenser second outlet
- 70.: second condenser gas inlet
- 71.: second condenser liquid outlet
- 73.: first inlet to separator
- 74.: second inlet
- 75.: second inlet (from absorber)
- 76.: separator gas outlet
- 77.: separator liquid outlet
- 78.: absorber inlet
- 79.: absorber outlet
- 80.: heat pump apparatus
- 81.: district heating plant
- 82.: users
- 85.: second inlet to second condenser
- 91.: condenser
- 92.: liquid inlet separator 98'
- 93.: liquid inlet separator 98
- 94.: liquid inlet second condenser
- 95.: Liquid outlet separator 98
- 98.: separator
- 99.: motor, generator

## Claims

1. Heat pump apparatus comprising:
- an evaporator, such as an evaporation tank (21), configured to evaporate by direct evaporation a liquid received from an external liquid source through a liquid inlet line (5) and an evaporator inlet (22) to an evaporation chamber, the pressure in the evaporation chamber being lower than the pressure in the liquid inlet line (5) and sufficient low for evaporating the liquid entering the evaporation chamber, i.e. the pressure in the evaporation chamber is so that the evaporation temperature of the liquid associated with the pressure is lower than the temperature of the liquid entering the evaporation chamber through the evaporator inlet (22) and allowing for generating a pressurized vapor leaving the evaporator through an evaporator vapor outlet (24), the evaporator additionally comprising an evaporator liquid outlet (23),
- an expander (7) having an expander inlet (25) and an expander outlet (26), the expander inlet (25) having a fluid connection to the evaporator vapor outlet (24) for receiving pressurized vapor from the evaporation to drive the expander (7),
- a compressor (9) having a compressor inlet (64) and a compressor outlet (65), the compressor (9) being operatively driven by the expander (7) for compressing a gas from a low pressure, low temperature inlet gas at the compressor inlet (64) to a high pressure, high temperature outlet gas at the compressor outlet (65),
- a first condenser (13a, 51) having a first condenser inlet (31) and a first condenser outlet (32), the first condenser inlet (31) having a fluid connection to the expander outlet (26) and being configured for condensing the fluid received from the expander (7) and the first condenser outlet (32) being connected to a first liquid outlet line (16a, 33).

2. An apparatus according to claim 1, comprising a second condenser (13b, 52) having a second condenser gas inlet (70) and a second condenser liquid outlet (71), the second condenser gas inlet (70) having a fluid connection to the compressor outlet (65) through which the high pressure, high temperature outlet gas leaves the compressor (9).

3. An apparatus according to claim 2, wherein the second condenser liquid outlet (71) has a fluid connection to an evaporation system.

4. An apparatus according to claim 3 wherein the evaporation system comprises an absorber (18) having an absorber inlet (78) and an absorber outlet (79), the absorber inlet (78) having a fluid connection to the second condenser liquid outlet (71), the absorber outlet (79) being connected to the compressor inlet (64), through which low pressure, low temperature gas enters the compressor.

5. An apparatus according to claim 3 wherein the evaporation system comprises a liquid-gas separator (98) separating liquid from gas and having a first inlet (73) and a second inlet (75), a separator gas outlet (76) and a separator liquid outlet (77),
the separator gas outlet (76) having a fluid connection to the compressor inlet (64) through which low pressure, low temperature enters the compressor (9),
the separator liquid outlet (77) having a fluid connection to an absorber inlet (78) of an absorber (18) having an absorber outlet (79)
the first inlet (73) of the separator (98) has a fluid connection to the second condenser liquid outlet (71), and
the second inlet (75) of the separator (98) has a fluid connection to the outlet of the absorber (18).

6. An apparatus according to any of claims 2-5, wherein the second condenser is a spray condenser (52) having additionally a second inlet (74) for liquid supply of a liquid having a first temperature, and where spray condensation of the high pressure, high temperature outlet gas with the liquid having the first temperature provides for a temperature increase so that liquid leaving the second condenser (52) through a second liquid outlet (69) thereof has a second temperature being higher than the first temperature.

7. An apparatus according to the preceding claims, wherein the external liquid source is a liquid cycle system comprising a first external source supply line (53) and a first external source return line (54).

8. An apparatus according to any of claims 5 or 6 wherein the gas-liquid separator (98) has a fluid connection to the second condenser (52) and the second condenser second liquid outlet (69) is connected to the first liquid outlet line (33) being in fluid connection to the external liquid source.

9. An apparatus according to any of claims 2 - 6 and 8, wherein the compressor outlet (65) is fluidly connected to the second condenser (13b, 52) optionally being a spray condenser (52) via a heat exchanger (55; 57-58) arranged on a wall of the evaporator (21) or in an evaporator chamber of the evaporator (21).

10. An apparatus according to any of the preceding claims, wherein two or more expanders (7',7") are arranged in series, the first expander (7') being driven by the exhaust flow from the evaporator (21) and the second expander (7") being driven by the exhaust flow from the first expander.

11. Apparatus according to claim 10, wherein the first expander (7') is drivingly connected to a compressor (9') and the second expander (7") is drivingly connected to a generator (99).

12. Apparatus according to claim 11, wherein a heat exchanger (59) is arranged between the fluid outlet line from the compressor (9) and the exhaust line from the first to the second expander (7',7").

13. Apparatus according to any of the preceding claims wherein one or more expanders (7',7") are arranged in parallel, both configured to be driven by respective exhaust flows from the evaporator (21) and configured to be drivingly connected to respective compressors (9',9") arranged in series, exhaust gas from the first compressor being delivered to the second compressor.

14. Apparatus according to any of the preceding claims, wherein an auxiliary motor (99) is connected to the expander or compressor for assisting in start-up procedures or during continuous operation procedures.

15. District heating network comprising:
a first external liquid source being a first grid and a second external liquid source being a second grid, the first grid comprising a first grid supply line (53') and a first grid return line (54'), and the second grid comprising a second grid supply line (53") and a second grid return line (54"),
the first grid supply line (53') being colder than the second grid supply line (53") and the first grid return line (54') being colder than the second grid return line (54"),
the lines of the first and the second grid being connected to a heat pump apparatus according to claims 1 and 2, the heat pump apparatus additionally comprising:
a gas-liquid separator (98), configured to separate gas from liquid and having a liquid inlet (93) and a liquid outlet (92) and a gas outlet (76) having a fluid connection to the compressor inlet (64).

16. District heating network according to claim 15, wherein
the first liquid inlet line (5) to the evaporator (21) has a liquid connection to the return line (54") of the second grid,
the liquid inlet (93) of the separator (98) has a fluid connection to the supply line (53') of the first grid,
a liquid inlet (94) of the second condenser (52) has a fluid connection to the liquid outlet (92) of the separator (98),
the liquid outlet (23) of the evaporator (21) has a fluid connection to the return line (54')' of the second grid,
the second liquid outlet (69) of the second condenser (52) has a fluid connection to the supply line (53") of the second grid, and
the liquid outlet line (33) from the first condenser (51) has a fluid connection to the return line (54') of the first grid.

17. District heating network according to claim 15, wherein
the liquid inlet line (5) to the evaporator (21) has a fluid connection to the supply line (53') of the first grid,
the liquid inlet (93) to the separator (98) has a fluid connection to the return line (54") of the second grid,
the liquid outlet (92) from the separator (98) has a fluid connection to the return line (54") of the second grid,
the evaporator liquid outlet (23) has a fluid connection to the second condenser (52),
the second condenser (52) has a fluid outlet to the supply line (53") of the second grid and
the liquid outlet line (33) from the first condenser (51) has a fluid connection to the return line (54') of the first grid.

## Patentansprüche

1. Wärmepumpenvorrichtung, umfassend:
- einen Verdampfer, wie etwa einen Verdampfungsbehälter (21), der dazu konfiguriert ist, durch direkte Verdampfung eine Flüssigkeit, die von einer externen Flüssigkeitsquelle durch eine Flüssigkeitseinlassleitung (5) und einen Verdampfereinlass (22) erhalten wird, zu einer Verdampfungskammer zu verdampfen, wobei der Druck in der Verdampfungskammer niedriger als der Druck in der Flüssigkeitseinlassleitung (5) und ausreichend niedrig zum Verdampfen der in die Verdampfungskammer eintretenden Flüssigkeit ist, d. h. der Druck in der Verdampfungskammer ist derart, dass die Verdampfungstemperatur der dem Druck zugeordneten Flüssigkeit niedriger ist als die Temperatur der Flüssigkeit, die durch den Verdampfereinlass (22) in die Verdampfungskammer eintritt, und die Erzeugung eines unter Druck stehenden Dampfes ermöglicht, der den Verdampfer durch einen Verdampferdampfauslass (24) verlässt, wobei der Verdampfer zusätzlich einen Verdampferflüssigkeitsauslass (23) umfasst,
- eine Expandiereinrichtung (7), die einen Expandiereinrichtungseinlass (25) und einem Expandiereinrichtungsauslass (26) aufweist, wobei der Expandiereinrichtungseinlass (25) eine Fluidverbindung mit dem Verdampferdampfauslass (24) aufweist, um unter Druck stehenden Dampf aus der Verdampfung aufzunehmen, um die Expandiereinrichtung (7) anzutreiben,
- einen Verdichter (9), der einen Verdichtereinlass (64) und einen Verdichterauslass (65) aufweist, wobei der Verdichter (9) durch die Expandiereinrichtung (7) betriebsmäßig angetrieben wird, um ein Gas aus einem Einlassgas mit niedrigem Druck und niedriger Temperatur an dem Verdichtereinlass (64) zu einem Auslassgas mit hohem Druck und hoher Temperatur an dem Verdichterauslass (65) zu verdichten,
- einen ersten Kondensator (13a, 51), der einen ersten Kondensatoreinlass (31) und einen ersten Kondensatorauslass (32) aufweist, wobei der erste Kondensatoreinlass (31) eine Fluidverbindung mit dem Expandiereinrichtungsauslass (26) aufweist und zum Kondensieren des Fluids konfiguriert ist, das von der Expandiereinrichtung (7) empfangen wird, und der erste Kondensatorauslass (32) mit einer ersten Flüssigkeitsauslassleitung (16a, 33) verbunden ist.

2. Vorrichtung nach Anspruch 1, umfassend einen zweiten Kondensator (13b, 52), der einen zweiten Kondensatorgaseinlass (70) und einen zweiten Kondensatorflüssigkeitsauslass (71) aufweist, wobei der zweite Kondensatorgaseinlass (70) eine Fluidverbindung mit dem Verdichterauslass (65) aufweist, durch den das Auslassgas mit hohem Druck und hoher Temperatur den Verdichter (9) verlässt.

3. Vorrichtung nach Anspruch 2, wobei der zweite Kondensatorflüssigkeitsauslass (71) eine Fluidverbindung mit einem Verdampfungssystem aufweist.

4. Vorrichtung nach Anspruch 3, wobei das Verdampfungssystem eine Absorptionseinrichtung (18) umfasst, die einen Absorptionseinrichtungseinlass (78) und einen Absorptionseinrichtungsauslass (79) aufweist, wobei der Absorptionseinrichtungseinlass (78) eine Fluidverbindung mit dem zweiten Kondensatorflüssigkeitsauslass (71) aufweist, wobei der Absorptionseinrichtungsauslass (79) mit dem Verdichtereinlass (64) verbunden ist, durch den Gas mit niedrigem Druck und niedriger Temperatur in den Verdichter eintritt.

5. Vorrichtung nach Anspruch 3, wobei das Verdampfungssystem eine Flüssigkeits-Gas-Trennvorrichtung (98) umfasst, die Flüssigkeit von Gas trennt und einen ersten Einlass (73) und einen zweiten Einlass (75), einen Trennvorrichtungsgasauslass (76) und einen Trennvorrichtungsflüssigkeitsauslass (77) aufweist,
wobei der Trennvorrichtungsgasauslass (76) eine Fluidverbindung mit dem Verdichtereinlass (64) aufweist, durch den niedriger Druck und niedrige Temperatur in den Verdichter (9) eintritt, der Trennvorrichtungsflüssigkeitsauslass (77) eine Fluidverbindung mit einem Absorptionseinrichtungseinlass (78) einer Absorptionseinrichtung (18) aufweist, die einen Absorptionseinrichtungsauslass (79) aufweist,
der erste Einlass (73) der Trennvorrichtung (98) eine Fluidverbindung mit dem zweiten Kondensatorflüssigkeitsauslass (71) aufweist
und
der zweite Einlass (75) der Trennvorrichtung (98) eine Fluidverbindung mit dem Auslass der Absorptionseinrichtung (18) aufweist.

6. Vorrichtung nach einem der Ansprüche 2-5, wobei der zweite Kondensator ein Sprühkondensator (52) ist, der zusätzlich einen zweiten Einlass (74) zur Flüssigkeitszufuhr einer Flüssigkeit aufweist, die eine erste Temperatur aufweist, und wobei durch eine Sprühkondensation des Auslassgases mit hohem Druck und hoher Temperatur, wobei die Flüssigkeit die erste Temperatur aufweist, eine Temperaturerhöhung bereitgestellt wird, sodass Flüssigkeit, die den zweiten Kondensator (52) durch einen zweiten Flüssigkeitsauslass (69) davon verlässt, eine zweite Temperatur aufweist, die höher ist als die erste Temperatur.

7. Vorrichtung nach den vorhergehenden Ansprüchen, wobei die externe Flüssigkeitsquelle ein Flüssigkeitskreislaufsystem ist, das eine erste Versorgungsleitung (53) der externen Quelle und eine erste Rückführleitung (54) der externen Quelle umfasst.

8. Vorrichtung nach einem der Ansprüche 5 oder 6, wobei die Gas-Flüssigkeits-Trennvorrichtung (98) eine Fluidverbindung mit dem zweiten Kondensator (52) aufweist und der zweite Flüssigkeitsauslass (69) des zweiten Kondensators mit der ersten Flüssigkeitsauslassleitung (33) verbunden ist, die in Fluidverbindung mit der externen Flüssigkeitsquelle steht.

9. Vorrichtung nach einem der Ansprüche 2-6 und 8, wobei der Verdichterauslass (65) über einen Wärmetauscher (55; 57-58), der an einer Wand des Verdampfers (21) oder in einer Verdampferkammer des Verdampfers (21) angeordnet ist, fluidisch mit dem zweiten Kondensator (13b, 52) verbunden ist, der gegebenenfalls ein Sprühkondensator (52) ist.

10. Vorrichtung nach einem der vorhergehenden Ansprüche, wobei zwei oder mehr Expandiereinrichtungen (7', 7") in Reihe angeordnet sind, wobei der erste Expandiereinrichtung (7') durch den Abgasstrom aus dem Verdampfer (21) und der zweiten Expandiereinrichtung (7") angetrieben werden, der durch den Abgasstrom aus der ersten Expandiereinrichtung angetrieben wird.

11. Vorrichtung nach Anspruch 10, wobei die erste Expandiereinrichtung (7') antriebsmäßig mit einem Verdichter (9') verbunden ist und die zweite Expandiereinrichtung (7") antriebsmäßig mit einem Generator (99) verbunden ist.

12. Vorrichtung nach Anspruch 11, wobei ein Wärmetauscher (59) zwischen der Fluidauslassleitung von dem Verdichter (9) und der Abgasleitung von der ersten zu der zweiten Expandiereinrichtung (7', 7'') angeordnet ist.

13. Vorrichtung nach einem der vorangehenden Ansprüche, wobei eine oder mehrere Expandiereinrichtungen (7', 7") parallel angeordnet sind, die beide dazu konfiguriert sind, von jeweiligen Abgasströmen aus dem Verdampfer (21) angetrieben zu werden, und dazu konfiguriert sind, antriebsmäßig mit jeweiligen Verdichtern (9', 9'') in Reihe angeordnet zu werden, wobei Abgas von dem ersten Verdichter dem zweiten Verdichter zugeführt wird.

14. Vorrichtung nach einem der vorangehenden Ansprüche, wobei ein Hilfsmotor (99) mit der Expandiereinrichtung oder dem Verdichter verbunden ist, um eine Unterstützung bei Startprozeduren oder während Dauerbetriebsprozeduren zur Verfügung zu stellen.

15. Fernwärmenetz, umfassend:
eine erste externe Flüssigkeitsquelle, bei der es sich um ein erstes Stromnetz handelt, und eine zweite externe Flüssigkeitsquelle, bei der es sich um ein zweites Stromnetz handelt, wobei das erste Stromnetz eine erste Stromnetzversorgungsleitung (53') und eine erste Stromnetzrückführleitung (54') umfasst und das zweite Stromnetz eine zweite Stromnetzversorgungsleitung (53'') und eine zweite Stromnetzrückführleitung (54'') umfasst,
wobei die erste Stromnetzversorgungsleitung (53') kälter ist als die zweite Stromnetzversorgungsleitung (53'') und die erste Stromnetzrückführleitung (54') kälter ist als die zweite Stromnetzrückführleitung (54''),
wobei die Leitungen des ersten und des zweiten Stromnetzes mit einer Wärmepumpenvorrichtung nach Anspruch 1 und 2 verbunden sind, wobei die Wärmepumpenvorrichtung zusätzlich Folgendes umfasst:
eine Gas-Flüssigkeits-Trennvorrichtung (98), die dazu konfiguriert ist, Gas von Flüssigkeit zu trennen, und einen Flüssigkeitseinlass (93) und einen Flüssigkeitsauslass (92) und einen Gasauslass (76) aufweist, der eine Fluidverbindung mit dem Verdichtereinlass (64) aufweist.

16. Fernwärmenetz nach Anspruch 15, wobei
die erste Flüssigkeitseinlassleitung (5) zu dem Verdampfer (21) eine Flüssigkeitsverbindung mit der Rückführleitung (54'') des zweiten Stromnetzes aufweist,
der Flüssigkeitseinlass (93) der Trennvorrichtung (98) eine Fluidverbindung mit der Versorgungsleitung (53') des ersten Stromnetzes aufweist,
ein Flüssigkeitseinlass (94) des zweiten Kondensators (52) eine Fluidverbindung mit dem Flüssigkeitsauslass (92) der Trennvorrichtung (98) aufweist,
der Flüssigkeitsauslass (23) des Verdampfers (21) eine Fluidverbindung mit der Rückführleitung (54')' des zweiten Stromnetzes aufweist,
der zweite Flüssigkeitsauslass (69) des zweiten Kondensators (52) eine Fluidverbindung mit der Versorgungsleitung (53'') des zweiten Stromnetzes aufweist und
die Flüssigkeitsauslassleitung (33) von dem ersten Kondensator (51) eine Fluidverbindung mit der Rückführleitung (54') des ersten Stromnetzes aufweist.

17. Fernwärmenetz nach Anspruch 15, wobei
die Flüssigkeitseinlassleitung (5) zu dem Verdampfer (21) eine Fluidverbindung mit der Versorgungsleitung (53') des ersten Stromnetzes aufweist,
der Flüssigkeitseinlass (93) zu der Trennvorrichtung (98) eine Fluidverbindung mit der Rückführleitung (54") des zweiten Stromnetzes aufweist,
der Flüssigkeitsauslass (92) von der Trennvorrichtung (98) eine Fluidverbindung mit der Rückführleitung (54") des zweiten Stromnetzes aufweist,
der Verdampferflüssigkeitsauslass (23) eine Fluidverbindung mit dem zweiten Kondensator (52) aufweist,
der zweite Kondensator (52) einen Fluidauslass zu der Versorgungsleitung (53") des zweiten Stromnetzes aufweist und die Flüssigkeitsauslassleitung (33) von dem ersten Kondensator (51) eine Fluidverbindung mit der Rückführleitung (54') des ersten Stromnetzes aufweist.

## Revendications

1. Appareil de pompe à chaleur, comprenant :
- un évaporateur, tel qu'un réservoir d'évaporation (21), configuré pour évaporer par évaporation directe un liquide reçu d'une source de liquide externe à travers une conduite d'entrée de liquide (5) et une entrée d'évaporateur (22) vers une chambre d'évaporation, la pression dans la chambre d'évaporation étant inférieure à la pression dans la ligne d'admission de liquide (5) et suffisamment basse pour évaporer le liquide entrant dans la chambre d'évaporation, c'est-à-dire que la pression dans la chambre d'évaporation est telle que la température d'évaporation du liquide associée à la pression est inférieure à la température du liquide entrant dans la chambre d'évaporation par l'entrée d'évaporateur (22) et permettant de générer une vapeur sous pression sortant de l'évaporateur par une sortie de vapeur d'évaporateur (24), l'évaporateur comprenant en outre une sortie de liquide d'évaporateur (23),
- un détendeur (7) ayant une entrée de détendeur (25) et une sortie de détendeur (26), l'entrée de détendeur (25) ayant une connexion fluidique avec la sortie de vapeur d'évaporateur (24) pour recevoir la vapeur sous pression provenant de l'évaporation pour entraîner le détendeur (7),
- un compresseur (9) ayant une entrée de compresseur (64) et une sortie de compresseur (65), le compresseur (9) étant entraîné fonctionnellement par le détendeur (7) pour comprimer un gaz à partir d'un gaz d'entrée basse pression et basse température à l'entrée de compresseur (64) en un gaz de sortie haute pression et haute température à la sortie de compresseur (65),
- un premier condenseur (13a, 51) ayant une première entrée de condenseur (31) et une première sortie de condenseur (32), la première entrée de condenseur (31) ayant une connexion fluidique avec la sortie de détendeur (26) et étant configurée pour condenser le fluide reçu du détendeur (7) et la sortie du premier condenseur (32) étant connectée à une première conduite de sortie de liquide (16a, 33).

2. Appareil selon la revendication 1, comprenant un second condenseur (13b, 52) ayant une seconde entrée de gaz de condenseur (70) et une seconde sortie de liquide de condenseur (71), la seconde entrée de gaz de condenseur (70) ayant une connexion fluidique avec la sortie de compresseur (65) à travers laquelle le gaz de sortie haute pression et haute température quitte le compresseur (9).

3. Appareil selon la revendication 2, dans lequel la seconde sortie de liquide de condenseur (71) a une connexion fluidique avec un système d'évaporation.

4. Appareil selon la revendication 3, dans lequel le système d'évaporation comprend un absorbeur (18) ayant une entrée d'absorbeur (78) et une sortie d'absorbeur (79), l'entrée d'absorbeur (78) ayant une connexion fluidique avec la seconde sortie de liquide de condenseur (71), la sortie d'absorbeur (79) étant connectée à l'entrée de compresseur (64), à travers laquelle le gaz basse pression et basse température entre dans le compresseur.

5. Appareil selon la revendication 3, dans lequel le système d'évaporation comprend un séparateur liquide-gaz (98) séparant le liquide du gaz et ayant une première entrée (73) et une seconde entrée (75), une sortie de gaz de séparateur (76) et une sortie de liquide de séparateur (77),
la sortie de gaz de séparateur (76) ayant une connexion fluidique avec l'entrée de compresseur (64) à travers laquelle le gaz basse pression et basse température entre dans le compresseur (9),
la sortie de liquide de séparateur (77) ayant une connexion fluidique avec une entrée d'absorbeur (78) d'un absorbeur (18) ayant une sortie d'absorbeur (79)
la première entrée (73) du séparateur (98) a une connexion fluidique avec la seconde sortie de liquide de condenseur (71), et
la seconde entrée (75) du séparateur (98) a une connexion fluidique avec la sortie de l'absorbeur (18).

6. Appareil selon l'une quelconque des revendications 2 à 5, dans lequel le second condenseur est un condenseur à pulvérisation (52) comportant en outre une seconde entrée (74) pour l'alimentation en liquide d'un liquide ayant une première température, et où la condensation à pulvérisation du gaz de sortie haute pression et haute température avec le liquide ayant la première température permet une augmentation de température de sorte que le liquide quittant le second condenseur (52) par une seconde sortie de liquide (69) de celui-ci a une seconde température supérieure à la première température.

7. Appareil selon les revendications précédentes, dans lequel la source de liquide externe est un système de cycle de liquide comprenant une première conduite d'alimentation de source externe (53) et une première conduite de retour de source externe (54) .

8. Appareil selon l'une quelconque des revendications 5 ou 6, dans lequel le séparateur liquide-gaz (98) a une connexion fluidique avec le second condenseur (52) et la seconde sortie de liquide de second condenseur (69) est connectée à la première conduite de sortie de liquide (33) en connexion fluidique avec la source de liquide externe.

9. Appareil selon l'une quelconque des revendications 2 à 6 et 8, dans lequel la sortie de compresseur (65) est connectée fluidiquement au second condenseur (13b, 52) pouvant être éventuellement un condenseur à pulvérisation (52) via un échangeur de chaleur (55 ; 57-58) agencé sur une paroi de l'évaporateur (21) ou dans une chambre d'évaporateur de l'évaporateur (21).

10. Appareil selon l'une quelconque des revendications précédentes, dans lequel deux ou plusieurs détendeurs (7', 7") sont agencés en série, le premier détendeur (7') étant entraîné par le flux d'échappement de l'évaporateur (21) et le second détendeur (7'') étant entraîné par le flux d'échappement du premier détendeur.

11. Appareil selon la revendication 10, dans lequel le premier détendeur (7') est relié en entraînement à un compresseur (9') et le second détendeur (7'') est relié en entraînement à un générateur (99).

12. Appareil selon la revendication 11, dans lequel un échangeur de chaleur (59) est agencé entre la conduite de sortie de fluide du compresseur (9) et la conduite d'échappement du premier au second détendeur (7', 7'').

13. Appareil selon l'une quelconque des revendications précédentes, dans lequel un ou plusieurs détendeurs (7', 7'') sont agencés en parallèle, tous deux étant configurés pour être entraînés par des flux d'échappement respectifs provenant de l'évaporateur (21) et configurés pour être reliés par entraînement à des compresseurs respectifs (9', 9") agencés en série, le gaz d'échappement du premier compresseur étant acheminé au second compresseur.

14. Appareil selon l'une quelconque des revendications précédentes, dans lequel un moteur auxiliaire (99) est connecté au détendeur ou au compresseur pour fournir une assistance pour les procédures de démarrage ou pendant les procédures de fonctionnement continu.

15. Réseau de chauffage urbain, comprenant :
une première source de liquide externe étant une première grille et une seconde source de liquide externe étant une seconde grille, la première grille comprenant une première conduite d'alimentation de grille (53') et une première conduite de retour de grille (54'), et la seconde grille comprenant une seconde conduite d'alimentation de grille (53'') et une seconde conduite de retour de grille (54''),
la première conduite d'alimentation de grille (53') étant plus froide que la seconde conduite d'alimentation de grille (53'') et la première conduite de retour de grille (54') étant plus froide que la seconde conduite de retour de grille (54"),
les conduites des première et seconde grilles étant connectées à un appareil de pompe à chaleur selon les revendications 1 et 2, l'appareil de pompe à chaleur comprenant en outre :
un séparateur gaz-liquide (98), configuré pour séparer le gaz du liquide et ayant une entrée de liquide (93) et une sortie de liquide (92) et une sortie de gaz (76) ayant une connexion fluidique à l'entrée de compresseur (64).

16. Réseau de chauffage urbain selon la revendication 15, dans lequel
la première conduite d'entrée de liquide (5) vers l'évaporateur (21) a une connexion liquide avec la conduite de retour (54'') de la seconde grille,
l'entrée de liquide (93) du séparateur (98) a une connexion fluidique avec la conduite d'alimentation (53') de la première grille,
une entrée de liquide (94) du second condenseur (52) a une connexion fluidique avec la sortie de liquide (92) du séparateur (98),
la sortie de liquide (23) de l'évaporateur (21) a une connexion fluidique avec la conduite de retour (54')' de la seconde grille, la seconde sortie de liquide (69) du second condenseur (52) a une connexion fluidique avec la conduite d'alimentation (53'') de la seconde grille, et
la conduite de sortie de liquide (33) du premier condenseur (51) a une connexion fluidique avec la conduite de retour (54') de la première grille.

17. Réseau de chauffage urbain selon la revendication 15, dans lequel
la première conduite d'entrée de liquide (5) vers l'évaporateur (21) a une connexion fluidique avec la conduite d'alimentation (53') de la première grille,
l'entrée de liquide (93) vers le séparateur (98) a une connexion fluidique avec la conduite de retour (54") de la seconde grille, la sortie de liquide (92) du séparateur (98) a une connexion fluidique avec la conduite de retour (54") de la seconde grille, la sortie de liquide d'évaporateur (23) a une connexion fluidique avec le second condenseur (52),
le second condenseur (52) a une sortie de fluide vers la conduite d'alimentation (53'') de la seconde grille, et
la conduite de sortie de liquide (33) du premier condenseur (51) a une connexion fluidique avec la conduite de retour (54') de la première grille.
